Europäisches Patentamt

**European Patent Office**

**Office européen des brevets**

(11) Publication number

**0 031 688**
A2

(12) # EUROPEAN PATENT APPLICATION

(21) Application number: 80304621.8

(51) Int. Cl.³: **H 02 P 1/04, H 02 P 1/44**

(22) Date of filing: **19.12.80**

(30) Priority: **28.12.79 GB 7944431**

(43) Date of publication of application: **08.07.81**
**Bulletin 81/27**

(84) Designated Contracting States: **AT BE CH DE FR IT LI
LU NL SE**

(71) Applicant: **MYSON GROUP LIMITED, Industrial Estate,
Ongar Essex CM5 9RE (GB)**

(72) Inventor: **Brown, David Michael, Esgors Thornwood
Common, Epping Essex (GB)**
Inventor: **Chabra, Janak Raj, 35, Westbury Lane,
Newport Pagnell Buckinghamshire (GB)**

(74) Representative: **Marsh, Roy David et al, Brewer &
Son 5-9, Quality Court Chancery Lane, London
WC2A 1HT (GB)**

(54) **Electric motor start up control.**

(57) Apparatus is disclosed comprising an electric motor (10),
a device which is driven by the motor and which imposes the
imposed load during a motor start up period, current varying
means (22, 36) operative during the motor start up period to
reduce the current supplied to the motor, and control means
(31, 32, 39, 40) to sense the end of the motor start up period
and in response thereto to cut out the load reduction means
and to cause the current varying means to cease current re-
duction. The control means may be responsive to a back EMF
generated by the motor and may be electronic or electro-me-
chanical. The current varying means may comprise a resistor in
series with a main winding of the motor or may be a triac. The
apparatus has particular application to electric motor driven
compressors of refrigerant fluid.

EP 0 031 688 A2

ACTORUM AG

- 1 -

## ELECTRIC MOTOR START UP CONTROL

The present invention relates to apparatus including an electric motor and start up control apparatus.

When an electric motor is started up it has a heavy demand for current which falls off as the rotational speed of the motor increases. In fact the starting current for a motor driving a compressor may be as high as five times the running current, whereas it is often desirable to reduce the starting current to less than twice the running current. The starting current can be made less pronounced by use of a primary resistance starter, as described for example in "The Electrical Engineers Reference Book", section 9-14, 11th edition, published in 1964 by George Newnes Ltd. The reduced current flowing through the motor, however, reduces the motor torque, and the torque may be found to be insufficient to bring the motor up to its normal running speed. The present invention seeks to provide means automatically to reduce the current due to, and the load on, an electric motor during starting thereof.

The invention has particular relevance to induction motors of the capacitor start and split phase types.

According to the present invention there is provided apparatus comprising an electric motor, a device which is driven by the motor and which imposes a load on the motor, load reduction means to reduce the imposed load during a motor start up period, current varying means operative during the motor start up period to reduce the current supplied to the motor, and control means to sense the end of the motor start up period and in response thereto to cut out the load reduction means and to cause the current varying means to cease current reduction.

Embodiments of the invention will now be more particularly described by way of example and with reference to the accompanying drawings; in which

Figure 1 shows a starting circuit and an electric motor according to a first embodiment of the invention; and

Figure 2 shows a starting circuit and an electric motor according to a second embodiment of the invention.

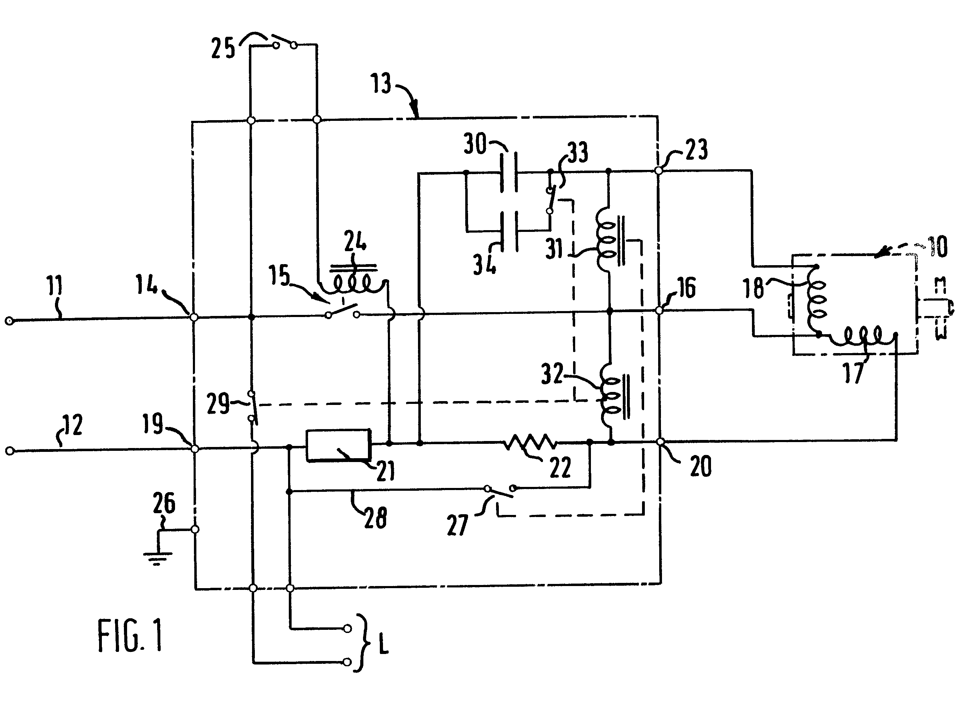

Referring now to Figure 1 of the drawings, a motor 10 driving a compressor (not shown) of an air conditioning plant or similar installation is connected to an AC supply through a starting circuit 13. Leads 11 and 12 of the AC supply are respectively connected to input terminals 14 and 19. Terminal 14 is connected through a main switch 15 to an output terminal 16, to which both the main winding 17 and the auxiliary winding 18 of the motor are connected. The other terminal 19 is connected through a motor protection device 21 and a start resistor 22 to output terminal 20, which is in turn connected to the main winding 17 of the motor 10.

The auxiliary winding 18 is also connected to a further output terminal 23 of the starting circuit 13, this terminal 23 being connected to terminal 19

- 3 -

through the protection device 21 and a running capacitor 30.

The main switch 15 is operated by a relay 24 through which current flows on depression of a motor start button 25. The chassis of the starting circuit may be earthed at 26.

A first relay 31 is actuable in response to back EMF generated in the auxiliary winding 18 to close a normally open switch 27 when a predetermined critical value of the back EMF is obtained. Closure of switch 27 brings into operation a shorting loop 28 to short out starting resistor 22 and the motor protection device 21.

A second relay 32 is actuable in response to back EMF generated in the main winding 17 to open normally closed switches 33 and 29 upon attainment of a predetermined critical back EMF. Opening of switch 33 cuts out a starting capacitor 34, and opening of switch 29 cuts out an off-loading device (generally indicated by L).

The off-loading device L is in this embodiment a solenoid valve which is connected at one end permanently to terminal 19 and at the other end to terminal 14 through switch 29, such that the off-loading device L is actuated while there is insufficient back EMF in the main winding 17 to operate relay 32. Actuation of the off-loading device L removes from the motor 10 the full load of the compressor. Thus, the main load of the compressor operating normally is not applied to the motor 10 until the relay 32 is actuated, i.e. until the motor has attained sufficient speed to generate the predetermined back EMF. In an air conditioning plant of which the motor and compressor form a part, a one-way valve is placed in the high pressure line downstream of the solenoid valve to ensure that refrigerant cannot flood back from the condenser to the compressor pot and/or the evaporator when the off-loading solenoid valve opens to connect the discharge and suction pipes.

In operation, the start button 25 is depressed to close the main switch 15. Switches 33 and 29 are in their normally closed positions, so that current flows to the off-loading device L, and the current supply to the auxiliary winding 18 flows through both capacitors 30 and 34 in parallel. As the back EMF in the windings of the motor 10 increases due to the motor turning, relay 31 is triggered to short out the starting resistor 22 by closure of switch 27. At the same time or subsequently relay 32 is also triggered to open switches 33 and 29, thereby to cut out start capacitor 34 and the off-loading device L so that the full load of the compressor is taken up by the motor 10.

Tests have been carried out which show that the starting current surge may be cut from 75A to below 25A, when using the circuit shown in Figure 1 of the drawing, and that the duration of the start made less than 0.5 sec. for normal operating voltages of 220 to 240 v. The tests also showed that the starting circuit was capable of operating efficiently for supply voltages below 190 v although the duration of the start increased as the supply voltage dropped.

It is believed that direct on-line starting of the compressor motor on a typical domestic supply could cause some voltage dips of 5 to 10%, a figure which would be unacceptable to most Electricity Supply Boards. By fitting the motor with the starting circuit as described with reference to Figure 1, the voltage dip is reduced by three times with respect to the no-load supply voltage. If however the voltage dip is compared to the supply voltage during operation of the compressor (load of approximately 15A) the dip is reduced to below 1%, a figure which would be acceptable to the Electricity Supply Boards.

During start-up, before relay 31 operates, the whole of the reduced starting current flows through the protection device 21. This device is so chosen that, should the reduced starting current flow through it for more than an acceptable time (several times the normal start duration), the protection device 21 will open, thereby switching the motor off.

The circuit is so arranged that the protection device 21 carries the auxiliary winding current continuously while power is applied to the motor. The characteristics of the protection device should also be such that if the current flowing through it exceeds the normal value of this current for a considerable period (several minutes) it will open and again switch off the motor 10. This protects the motor windings 17 and 18 against damage should either of the relays 31 or 32 fail or should the motor become heavily overloaded.

With the starting resistor 22 in series with the main winding 17 but not with the auxiliary winding 18, greater motor torque is generated during starting of the motor 10 than would be available if the resistor were to be inserted in the supply in such a position that it is in series with both windings.

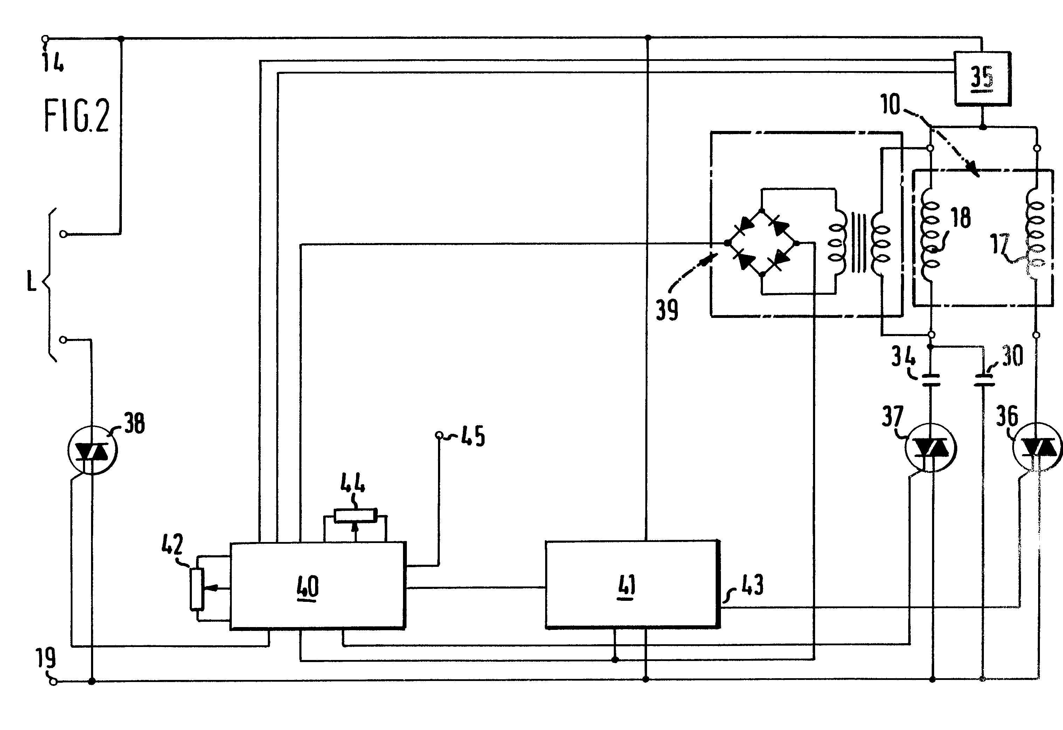

Referring now to Figure 2 of the drawings, in which like parts are numbered as in Figure 1, motor 10 driving a compressor or the like is connected to an AC supply at terminals 14 and 19. Terminal 14 is connected through a sensing device 35 to detect total motor current to the main winding 17 and auxiliary winding 18 of the motor 10. Sensor 35 is typically a current transformer, although a small value resistor could be used. Terminal 19 is connected to the main winding 17 through a first phase controlled triac device 36; and to the auxiliary winding 18 through a running capacitor 30 in parallel with a start capacitor 34 and second triac device 37. A third triac device 38 is connected between terminal 19 and the off-loading device L, which is also connected directly to terminal 14.

A second sensing device 39 is provided to generate an output responsive to rotation of the motor. This sensor 39 is shown as a device to monitor the back EMF across the auxiliary winding which increases sharply with motor speed, but it can alternatively be a tachometer type of device to produce an output proportional to rotational speed of the motor. The first triac device 36 controlling the main winding motor current is phase controlled

- 7 -

by a ramp and pedestal control unit 41 which will be further described hereinafter. It would be possible to substitute for this triac device a saturable reactor but this would be more expensive, larger and heavier. Triac devices 37 and 38 act as simple switches in the same way as switches 33 and 29 of Figure 1, being operated to close at a predetermined level of operation of the motor 10. They could be replaced by electromechanical switches.

In operation, power is applied to the circuit through terminals 14 and 19. The second and third triac devices 37 and 38 both conduct, thereby switching in starting capacitor 34 and off-loading device L. Unit 40 contains means to generate a pedestal voltage which increases at a rate controlled by ramp rate setting 42 which may be any predetermined rate. The pedestal voltage may typically rise gradually under control of this setting over a period of 1 second. A ramp voltage is also generated and is preferably of the cosine modified type to give linear response. The pedestal voltage level is passed to ramp and pedestal phase control unit 41, which through output 43 gives a control signal to phase controlled triac device 36. The firing angle of triac device 36 thus gradually increases as the pedestal voltage rises, allowing a gradually increasing amount of current to flow through the main winding 17.

Meanwhile the current in the auxiliary winding 18 will be at a maximum value limited only by the reactance of the two capacitors 34 and 30 in parallel. The voltage across the auxiliary winding 18 will therefore be minimal and hence the DC control voltage produced by the motor speed sensor 39 will be very small. As the current to the main winding 17 increases, a point will be reached where there is sufficient current to cause the motor to start turning, at which stage a back EMF will be produced in the auxiliary winding 18. At even quite slow rotational speeds of the motor this back EMF reaches a significant amplitude, and when it reaches a predetermined level, control of the pedestal voltage level is taken over by motor current sensor 35.

The sensor 35 gives an AC signal dependent on the total motor current, which signal is amplified and rectified in unit 40 to give a DC output. A maximum value of current may be set in a hold current device 44, and is compared in unit 40 with the value indicated by the DC output originating from sensor 35 to produce an output to control the pedestal voltage, which is thereby increased by an amount sufficient to allow triac device 36 to fire earlier in each cycle so that the amount of current flowing to the main winding 17 brings the total current up to the maximum permissible value. After this, the current is held at this maximum permissible value and the motor 10 will accelerate, and as it does so the voltage across the auxiliary winding 18 will increase further. When this voltage reaches another predetermined amplitude representative of normally running motor speed unit 40 switches off triac devices 37 and 38, thereby deactivating starting capacitor 34 and off-loading device L. At the same time triac device 36 is switched fully open allowing the motor to run normally.

If, during starting, the current tries to exceed the permissible level, the firing angle of triac device 36 is reduced to allow less current to pass to the main winding 17. Also if the current increase is beyond the control afforded, i.e. a fault condition, the unit 40 switches all three triac devices off and produces a signal at an alarm output 45. Similarly, if the total current sensor 35 shows that the current has reached the maximum permissible value without any signal having been given by the motor speed sensor 39, a fault is also indicated.

The circuit shown in Figure 2 has advantages over the circuit of Figure 1 in that only sufficient current is drawn to start the motor under any set of conditions, and the inclusion of fail safe and alarm facilities are relatively straightforward with the electronic system of Figure 2.

It will, of course, be appreciated that either of the circuits shown in Figures 1 and 2 can be made to operate without an off-loading device, although this would require a significantly larger and more powerful motor to be used.

- 10 -

CLAIMS:

1.        Apparatus comprising an electric motor (10) and a device which is driven by the motor and which imposes a load on the motor, characterised by load reduction means (L) to reduce the imposed load during a motor start up period, current varying means (22,36) operative during the motor start up period to reduce the current supplied to the motor, and control means (31,32,38,39,40) to sense the end of the motor start up period and in response thereto to cut out the load reduction means and to cause the current varying means to cease current reduction.

2.        Apparatus as claimed in claim 1, wherein said control means is responsive to the rotational speed of the motor.

3.        Apparatus as claimed in claim 2, wherein said control means is responsive to a back EMF generated by the motor.

4.        Apparatus as claimed in any one of the preceding claims, wherein the load is a compressor and the load reduction means comprises a solenoid valve actuable by switch means.

5.        Apparatus as claimed in any one of the preceding claims, wherein said current varying means comprises a resistor (22) in series with a main winding (17) of the motor.

- 11 -

6.       Apparatus as claimed in claim 5, wherein said current varying means further comprises a switch (27) in parallel with said resistor and actuable to short out said resistor at the end of the start up period.

7.       Apparatus as claimed in any one of claims 1 to 4, wherein said current varying means comprises a triac device (36) in series with a main winding (17) of the motor.

8.       Apparatus as claimed in claim 7, wherein said triac device is controlled by a variable ramp and pedestal control voltage.

9.       Apparatus as claimed in claim 8, further comprising means (35) to sense the total motor current, and in response thereto to vary the amplitude of the pedestal voltage to maintain the total motor current at a value which does not exceed a predetermined maximum value.

10.      Apparatus as claimed in any one of claims 7 to 9, wherein said triac device is arranged to become fully conducting at the end of the start up period.

FIG.1

0031688

FIG.2

14

35

10

17

18

30

34

36

37

39

43

41

45

44

40

42

38

19

L